(19) Europäisches Patentamt
European Patent Office
Office européen des brevets

(11) EP 4 119 594 A1

(12) EUROPÄISCHE PATENTANMELDUNG

(43) Veröffentlichungstag:
**18.01.2023 Patentblatt 2023/03**

(21) Anmeldenummer: **21185976.4**

(22) Anmeldetag: **16.07.2021**

(51) Internationale Patentklassifikation (IPC):
***C08G 59/50*** *(2006.01)* ***C08G 59/68*** *(2006.01)*
***C08K 5/103*** *(2006.01)*

(52) Gemeinsame Patentklassifikation (CPC):
(C-Sets verfügbar)
**C08G 59/681; C04B 40/065; C08G 59/5006;**
C04B 2111/00715; C04B 2111/766 (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
- **Peschke, Ursula**
  **85617 Aßling (DE)**
- **Bornschlegl, Alexander**
  **81245 München (DE)**
- **Behrens, Nicole**
  **81245 München (DE)**

(74) Vertreter: **Hilti Aktiengesellschaft**
**Corporate Intellectual Property**
**Feldkircherstrasse 100**
**Postfach 333**
**9494 Schaan (LI)**

# (54) ACRYLATHALTIGE BINDEMITTEL FÜR BEFESTIGUNGSZWECKE

(57) Die vorliegende Erfindung betrifft die Verwendung von Acrylat-basierten Verbindungen in der Komponente (A) eines mehrkomponentigen Befestigungsmörtelsystems zur Beschleunigung des Aushärtens bei niedrigen Temperaturen. In einer weiteren Ausführungsform betrifft die vorliegende Erfindung ein mehrkomponentiges Befestigungsmörtelsystem, welches in einer Komponente (A) Reaktiv-Kunstharz auf Epoxidharzbasis und Acrylat-basierte Verbindungen beinhaltet, und in einer weiteren Komponente (B) Härter beinhaltet.

EP 4 119 594 A1

(52) Gemeinsame Patentklassifikation (CPC): (Forts.)

C-Sets
**C04B 40/065, C04B 7/02, C04B 7/32,
C04B 14/042, C04B 14/06, C04B 14/303,
C04B 14/365, C04B 14/368, C04B 18/165,
C04B 24/2641, C04B 26/14;
C04B 40/065, C04B 7/02, C04B 14/06,
C04B 14/066, C04B 24/2641, C04B 26/14**

## Beschreibung

Die vorliegende Erfindung betrifft die Verwendung von Acrylat-basierten Verbindungen in der Komponente (A) eines mehrkomponentigen Befestigungsmörtelsystems zur Beschleunigung des Aushärtens bei niedrigen Temperaturen. Die vorliegende Erfindung betrifft ferner ein Mehrkomponentiges Befestigungsmörtelsystem, welches in einer Komponente (A) Reaktiv-Kunstharz auf Epoxidharzbasis und Acrylat-basierte Verbindungen beinhaltet, und in einer weiteren Komponente (B) Härter beinhaltet. In einer weiteren Ausführungsform betrifft die vorliegende Erfindung die Verwendung des mehrkomponentigen Befestigungsmörtelsystems zum Befestigen von Verankerungselementen in einem Loch oder Spalt in einem Bausubstrat, sowie ein entsprechendes Verfahren.

## Hintergrund

Epoxidharzmischungen für mehrkomponentige Befestigungsmörtelsysteme bestehen typischerweise aus vergleichsweise hochviskosen Reaktionsharzen, die mit Reaktivverdünnern auf die für die Verwendung geeignete Viskosität eingestellt werden. Dies ist nötig, da die Auspresskräfte von Befestigungsmörtelsysteme (Injektionsmörteln) bei niedrigen Applikationstemperaturen bei alleiniger Verwendung der hochviskosen Reaktionsharzen zu hoch für eine problemlose Verarbeitbarkeit sind.

Als hochviskose Reaktionsharze kommen meistens Bisphenol A- oder Bisphenol F-basierte Epoxidharze (BPA/BPF-Harze) zum Einsatz. Typische Reaktivverdünner sind glycidylbasierte Reaktivverdünner, wie z.B. Trimethylolpropantriglycidylether (TMPTGE), 1,6-Hexandioldiglycidylether (HDDGE), 1,4-Butandioldiglycidylether (BDDGE) oder Neopentylglycidylether.

Die Verwendung von glycidylbasierten Reaktivverdünnern wie TMPTGE hat den Nachteil, dass die Epoxidharzmischung bei tiefen Temperaturen (ab ca. 5 °C) relativ lange Aushärtezeiten aufweist. Eine Beschleunigung der Aushärtung ist sinnvoll, um die Wartezeiten vor dem nächsten Arbeitsschritt zu verkürzen.

Ferner handelt es sich dabei um Substanzen, die aufgrund ihrer chemischen Eigenschaften negative Auswirkungen auf Produktion und Anwendung haben. Neben einem sensibilisierenden Potential, das auch die Reaktionsharze (BPA/BPF-Harz) besitzen, weisen die Reaktiwerdünner ätzende und zum Teil auch CMR-Eigenschaften (karzinogen, mutagen, reproduktionstoxisch) auf.

Aus dem Klebstoff- und Beschichtungsbereich sind Kombinationen aus Epoxy- und Acrylat-Verbindungen bekannt, und sind beispielsweise in der EP 1431365, EP 2366738 oder EP 1256615 beschrieben. Die Beschleunigung der Aushärtung bei niedriger Temperatur, insbesondere von Befestigungsmörtelsystemen, ist jedoch im Stand der Technik nicht beschrieben.

Gesucht ist daher ein Befestigungsmörtelsystem, das sowohl gute Lastwerte bei Raumtemperatur als auch ein schnelles Aushärteverhalten bei tiefen Temperaturen zeigt und deren Handhabbarkeit gleichzeitig durch verringertes Labeling verbessert wird.

## Zusammenfassung der Erfindung

Die Aufgabe der Erfindung wird gelöst durch die Verwendung von Acrylat-basierten Verbindungen in der Komponente (A) eines mehrkomponentigen Befestigungsmörtelsystems, wodurch eine beschleunigte Tieftemperaturhärtung erreicht wird. Die Erfindung ermöglicht den Einsatz von chemischen Dübeln, die gute Performance bei Raumtemperatur und zugleich eine beschleunigte Aushärtung bei tiefen Temperaturen zeigen und die sich zugleich auch darin auszeichnen, dass sie im Bereich des Arbeitsschutzes geringere Schutz-Maßnahmen erfordern.

In einer Ausführungsform betrifft die vorliegende Erfindung daher die Verwendung von Acrylat-basierten Verbindungen in der Komponente (A) eines mehrkomponentigen Befestigungsmörtelsystems zur Beschleunigung des Aushärtens bei niedrigen Temperaturen.

In einer anderen Ausführungsform betrifft die vorliegende Erfindung ein mehrkomponentiges Befestigungsmörtelsystem, welches

- ∘ in einer Komponente (A) Reaktiv-Kunstharz auf Epoxidharzbasis und Acrylat-basierte Verbindungen beinhaltet, und
- ∘ in einer weiteren Komponente (B) Härter beinhaltet.

In einer weiteren Ausführungsform betrifft die Erfindung die Verwendung eines erfindungsgemäßen mehrkomponentigen Befestigungsmörtelsystems zum Befestigen von Verankerungselementen in einem Loch oder Spalt in einem Bausubstrat.

Verfahren zur Befestigung von einem Verankerungselement in einem Loch oder Spalt in einem Bausubstrat, bei dem ein erfindungsgemäßes mehrkomponentiges

Befestigungsmörtelsystem und ein Verankerungselement in das Loch oder den Spalt eingebracht und aushärten

gelassen werden.

Weitere Ausführungsformen der vorliegenden Erfindung sind in der nachstehenden detaillierten Beschreibung und den beigefügten abhängigen Patentansprüchen beschrieben.

**Detaillierte Beschreibung der Erfindung**

Im Sinne der Erfindung haben die hier und in der nachfolgenden Beschreibung verwendeten Begriffe die folgende Bedeutung:

*"aliphatische Verbindungen"* sind acyclische oder cyclische, gesättigte oder ungesättigte Kohlenstoffverbindungen, ausgenommen aromatische Verbindungen,

*"cycloaliphatische Verbindungen"* oder *"alicyclische Verbindungen"* sind Verbindungen mit einer carbocyclischen Ringstruktur, ausgenommen Benzolderivate oder andere aromatische Systeme,

*"aromatische Verbindungen"* sind Verbindungen, die der Hückel (4n+2)-Regel folgen, und *"Amine"* sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd Ed. (the "Gold Book"), Compiled by A. D. McNaught and A. Wilkinson, Blackwell Scientific Publications, Oxford (1997)).

Wie vorstehend ausgeführt betrifft die vorliegende Erfindung in einer Ausführungsform die Verwendung von Acrylat-basierten Verbindungen in der Komponente (A) eines mehrkomponentigen Befestigungsmörtelsystems zur Beschleunigung des Aushärtens bei niedrigen Temperaturen.

Bei den Befestigungsmörtelsystemen, wie sie gemäß der vorliegenden Erfindung verwendet werden, handelt es sich um *"mehrkomponentige"* Systeme. Ein mehrkomponentiges Befestigungsmörtelsystem enthält mehrere voneinander getrennt gelagerte Komponenten, so dass eine Härtung der in den Komponenten enthaltenen Inhaltsstoffe erst nach dem Vermischen aller Komponenten erfolgt. Insbesondere enthält das erfindungsgemäß verwendete mehrkomponentige Befestigungsmörtelsystem mindestens eine Komponente (A), die Reaktiv-Kunstharz auf Epoxidharzbasis und die Acrylat-basierten Verbindungen beinhaltet, und mindestens eine weitere Komponente (B), die Härter beinhaltet. In einer bevorzugten Ausführungsform handelt es sich bei dem erfindungsgemäßen Befestigungsmörtelsystem um ein Zwei-Komponenten-System *("2K-System").*

Im Folgenden werden die Bestandteile der Komponenten (A) und (B) des mehrkomponentigen Befestigungsmörtelsystems beispielhaft anhand eines 2K-Systems näher erläutert.

Komponente (A)

Komponente (A) des mehrkomponentigen Befestigungsmörtelsystems umfasst typischerweise flüssige und feste Bestandteile. Als ein typischerweise flüssiger Bestandteil ist üblicherweise mindestens ein Reaktiv-Kunstharz auf Epoxidharzbasis (*"Epoxidharzkomponente (A)"*) enthalten. Als *"Epoxidharz"* wird erfindungsgemäß eine Verbindung oder die Kombination von zwei oder mehreren Verbindungen verstanden die eine reaktive Epoxidgruppe, auch Oxirangruppe genannt, enthalten. Nachstehend ist solch eine Epoxidgruppe gezeigt:

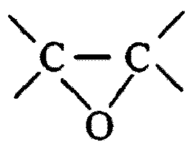

Als härtbares Epoxidharz zur Verwendung in Komponente (A) der vorliegenden Erfindung kommt eine Vielzahl der hierfür dem Fachmann bekannten und kommerziell erhältlichen Verbindungen in Betracht, die im Mittel mehr als eine Epoxid-Gruppe, vorzugsweise zwei Epoxid-Gruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400 aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Für die vorliegende Erfindung nützliche epoxidbasierte Monomere/Harze schließen, ohne den Umfang der Erfindung einzuschränken, Diglycidylether von Bisphenol A und F, sowie aliphatische und cycloaliphatische Epoxide mit ein. Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von MW $\leq$ 2000 g/mol. Spezifische weitere Beispiele sind, ohne einzuschränken, 3,4-Epoxycyclohexylmethyl-3',4'-epoxycyclohexancarboxylat (ECC, ERL-4221 von Union Carbide) und Sorbitolglycidylether (Erisys GE-60 von CVC Specialty Chemicals). Bevorzugt werden flüssige Diglycidylether auf Basis von Bisphenol A und/oder F mit einem EEW von 150 bis 300 g/EQ.

Die EEW (epoxide equivalent weight, Epoxidäquivalentwerte) sind in der Regel auf den Ausgangsmaterialien von den Herstellern angegeben oder sie werden nach bekannten Methoden ermittelt bzw. berechnet. Sie geben die Menge in g Harz an, die 1 Mol Epoxidgruppen enthält: *EEW = MW / Funktionalität.*

Das Äquivalentgewicht der Acrylat-basierten Verbindungen wird in ganz analoger Weise ermittelt bzw. berechnet. Bei der Berechnung des *"EEW"* werden erfindungsgemäß die auf reaktive Acrylat-basierte Verbindungen zurückgehenden Äquivalente und die reaktiven Epoxy-Äquivalente kombiniert.

Der Anteil an Epoxidharz an der Epoxidharzkomponente (A) beträgt >0 bis 70 Gew.-%, bevorzugt 10 bis 65 Gew.-% und besonders bevorzugt 30 bis 60 Gew.-%, bezogen auf das Gesamtgewicht der Epoxidharzkomponente (A).

Die Komponente (A) enthält ferner als weiteren flüssigen Bestandteil mindestens einen Reaktivverdünner. Die vorliegende Erfindung ist insbesondere dadurch gekennzeichnet, dass als Reaktivverdünner in Komponente (A) mindestens eine Acrylat-basierte Verbindung enthalten ist.

Der hier verwendete Begriff *"Acrylat-basierte Verbindung"* (auch *"acrylathaltiges Bindemittel"*) bezeichnet Verbindungen mit der folgenden chemischen Struktur:

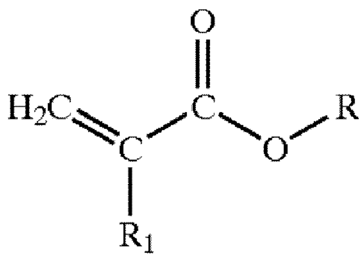

wobei $R_1$ z.B. Wasserstoff, eine Methylgruppe oder eine Ethylgruppe sein kann. Der Begriff *"Acrylat-basierte Verbindung"* oder *"Acrylathaltiges Bindemittel"* schließt dabei sowohl Säuren als auch die Salze der Säuren (einschließlich Acrylsäure, Methacrylsäure, Ethacrylsäure, etc.) mit ein. So können Acrylat-basierte Verbindungen zum Beispiel Acrylsäure und Acrylate, Methacrylsäure und Methacrylate oder Ethacrylsäure und Ethacrylate mit einschließen. Die Acrylat-basierte Klebstoffkomponente ist, unter Verwendung der vorstehenden Struktur, zum Beispiel als Acrylsäure (organische Säure) bekannt, wenn R und $R_1$ beides Wasserstoffatome sind. Wenn R ein Wasserstoffatom und $R_1$ eine Methylgruppe ist, ist die Acrylat-basierte Klebstoffkomponente als Methacrylsäure bekannt. Wenn R eine Methylgruppe und $R_1$ ein Wasserstoffatom ist, ist die Acrylat-basierte Klebstoffkomponente als Methylacrylat bekannt und die Acrylat-basierte Klebstoffkomponente wird als *"Acrylat-basiert"* bezeichnet. Acrylat-basierte Verbindungen besitzen im Allgemeinen die chemische Struktur $H_2C$=CH-COO-. Wenn R und $R_1$ beides Methylgruppen sind, ist die Acrylat-basierte Klebstoffkomponente als Methylmethacrylat (MMA) bekannt, und wird methacrylat-basiert genannt.

Für die vorliegende Erfindung nützliche Acrylat-basierte Verbindungen schließen, ohne einzuschränken, insbesondere Acrylat-basierte und Methacrylat-basierte Monomere ein.

Die gemäß der Erfindung verwendete Komponente (A) des mehrkomponentigen Befestigungsmörtelsystems enthält dabei vorzugsweise 1 bis 30 Gew.-%, vorzugsweise 5 bis 20 Gew.-% an Acrylat-basierten Verbindungen, bezogen auf das Gesamtgewicht der flüssigen Bestandteile in der Komponente (A).

Als weiterer flüssiger Reaktivverdünner können erfindungsgemäß Glycidylether von aliphatischen, alicyclischen oder aromatischen Mono- oder insbesondere Polyalkoholen verwendet werden, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether, Trimethylolpropantriglycidylether (TMPTGE) oder Trimethylolethantriglycidylether (TMETGE), wobei Trimethylolethantriglycidylether bevorzugt ist. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder 1,4-Butandioldiglycidylether (BDDGE) und Trimethylolethantriglycidylether (TMETGE).

Insgesamt liegen die Reaktivverdünner bevorzugt in einer Menge von >0 bis 60 Gew.-% vor, insbesondere von 1 bis 20 Gew.-%, bezogen auf das Gesamtgewicht der Epoxidharzkomponente (A).

Der Anteil der Epoxidharzkomponente (A) an der Gesamtmasse des Mehrkomponenten-Epoxidharzsystems beträgt vorzugsweise 5 bis 90 Gew.-%, insbesondere 20 bis 80 Gew.-%, 30 bis 70 Gew.-% oder 40 bis 60 Gew.-%.

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Des Weiteren kann die Epoxidharzkomponente (A) übliche feste Zusätze enthalten, insbesondere Füllstoffe oder Thixotropiermittel (Verdicker).

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Als Füllstoffe können insbesondere Quarzmehle, z.B. nicht oberflächenbehandelte Quarzmehle eingesetzt werden.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Epoxidharzkomponente (A).

Weitere denkbare Zusätze zur Epoxidharzkomponente (A) sind ferner Thixotropiermittel, wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Die Verwendung mindestens einer Acrylat-basierten Verbindung in dem erfindungsgemäßen mehrkomponentigen Befestigungsmörtelsystem führt zu einer Beschleunigung der Aushärtung bei niedrigen Temperaturen. Unter dem Begriff *"Beschleunigung"* ist erfindungsgemäß eine um mindestens 10% höhere Verbundspannung zu verstehen, die sich bei einer Temperatur von 5°C oder weniger nach gleicher Aushärtezeit im Vergleich zu einem - ansonsten identischem - Befestigungsmörtelsystem ergibt, das keine Acrylat-basierten Verbindungen, insbesondere keine Acrylat-basierten Reaktivverdünner enthält.

Komponente (B)

Komponente (B) des mehrkomponentigen Befestigungsmörtelsystems umfasst mindestens einen Härter (*"Härterkomponente (B)"*). Der Härter beinhaltet mindestens eine zur Epoxidhärtung gebräuchliche Verbindung (Reaktionspartner bei der Polyaddition). Der Begriff *"Härter"* bedeutet dabei vorzugsweise mindestens eine zur Epoxidhärtung gebräuchliche Verbindung mit oder ohne Füllstoffzusatz und/oder weitere Zusätze, wie Wasser, Verdickungsmittel und/oder weitere Zusatzstoffe, mit anderen Worten, die komplette Härterkomponente. Übliche Zusätze können zugesetzt sein, wie z.B. Füllstoffe, wie bereits vorstehend im Zusammenhang mit Komponente (A) beschrieben. Die weiteren Zusätze der Härterkomponente eines erfindungsgemäßen Befestigungsmörtelsystems auf Epoxidbasis können beispielsweise in einem Gewichtanteil von insgesamt 0,01 bis 70 Gew.-%, z.B. von 1 bis 40 Gew.-% bezogen auf die Härterkomponente (B) vorgesehen sein.

Bei den zur Epoxidhärtung gebräuchlichen Verbindungen (die als Reaktionspartner bei der Polyaddition fungieren) handelt es sich insbesondere um solche mit zwei oder mehr Gruppen, ausgewählt aus Amino, Imino, und Mercapto, beispielsweise entsprechende Amine, Thiole, oder Aminothiole, oder Gemische davon, beispielsweise wie in Lee H and Neville K, "Handbook of Epoxy Resins" (New. York: McGraw-Hill), 1982, genannt.

Als reaktive Härterkomponenten werden erfindungsgemäß ein oder mehrere Amine, bevorzugt Polyamine, eingesetzt. Als im Härter verwendbare Amine sind insbesondere die für Epoxid-Amin-Systeme üblichen und dem Fachmann bekannten Amine, ausgewählt aus aliphatischen, alicyclischen und aromatischen Aminen, geeignet, wobei das Amin im Mittel mindestens zwei reaktive Wasserstoffatome, gebunden an ein Stickstoffatom, pro Molekül aufweist. Hierunter fallen auch Polyamine mit mindestens zwei Aminogruppen im Molekül. Geeignete Amine, ohne den Umfang

der Erfindung einzuschränken, sind beispielsweise: 1,2-Diaminoethan(ethylendiamin), 1,2-Propandiamin, 1,3-Propandiamin, 1,4-Diaminobutan, 2,2-Dimethyl-1, 3-propandiamin(neopentandiamin), Diethylaminopropylamin (DEAPA), 2-Methyl-1, 5-diaminopentan, 1,3-Diaminopentan, 2,2,4- oder 2,4,4-Trimethyl-1, 6-diaminohexan und Gemische davon (TMD), 1-Amino-3-aminomethyl-3, 5,5-trimethylcyclohexan, 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-aminocyclohexyl)methan, Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), Bis(4-amino-3-methylcyclohexyl)methan, 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropylaminopropylamin (DMAPAPA), 3-Aminomethyl-3, 5,5-trimethylcyclohexylamin (Isophorondiamin (IPD)), Diaminodicyclohexylmethan (PACM), gemischte polycyclische Amine (MPCA) (z.B. Ancamine 2168), Dimethyldiaminodicyclohexylmethan (Laromin C260), 2,2-Bis(4-aminocyclohexyl) propan.

Erfindungsgemäß bevorzugt sind Polyamine, wie 2-Methylpentandiamin (DYTEK A), 1-Amino-3-aminomethyl-3, 5,5-trimethylcyclohexan (IPD), 1,3-Benzoldimethanamin (m-Xylylendiamin, mXDA), 1,4-Benzoldimethanamin (p-Xylylendiamin, PXDA), 1,6-Diamino-2, 2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), 1,3-Bisaminomethylcyclohexan (1,3-BAC), (3(4),8(9)Bis(aminomethyl)dicyclo[5. 2.1.0$^{2\ 6}$]decan (Isomerengemisch, tricyclischer primärer Amine; TCD-Diamin), 1,14-Diamino-4, 11-dioxatetradecan, Dipropylentriamin, 2-Methyl-1, 5-pentandiamin, N, N'-Dicyclohexyl-1, 6-hexandiamin, N, N'-Dimethyl-1, 3-diaminopropan, N, N'-Diethyl-1, 3-diaminopropan, N, N-Dimethyl-1, 3-diaminopropan, sekundäre Polyoxypropylendi- und triamine, 2,5-Diamino-2, 5-dimethylhexan, Bis(amino-methyl)tricyclopentadien, 1,8-Diamino-p-menthan, Bis-(4-amino-3, 5-dimethylcyclohexyl)-methan, 1,3-Bis(aminomethyl)cyclohexan (1,3-BAC), Dipentylamin, N-2-(Aminoethyl)piperazin (N-AEP), N-3-(Aminopropyl)piperazin, oder Piperazin.

Die Bestimmung des AHEW (amine hydrogen equivalent weight, H-Äquivalente, Menge Harz, die 1 mol reaktives H enthält) erfolgt in für den Fachmann bekannter Weise anhand der Formulierung der Reaktionsmischung aus den bekannten H-Äquivalenten der verwendeten Edukte und Rohstoffe, aus denen sie errechnet werden.

Für ein einfaches Amin sei die Errechnung des AHEW am Beispiel von meta-Xylylendiamin (MW = 136 g/mol, Funktionalität = 4 eq/mol) rein exemplarisch erläutert:

$$\text{Allgemeine Formel: } AHEW = \frac{M_W}{Funktionalität} = \frac{136}{4}\left[\frac{g}{eq}\right] = 34\left[\frac{g}{eq}\right]$$

Ferner können in der Härterkomponente (B) Füllstoffe und Thixotropiermittel, wie bereits vorstehend im Zusammenhang mit der Epoxidharzkomponente (A) beschrieben, vorhanden sein.

Anwendung

Unter einem mehrkomponentigen Befestigungsmörtelsystem ist insbesondere ein Kit mit zwei oder mehreren Komponenten zu verstehen (vorzugsweise ein 2K-System) mit einer Komponente (A), welche ein oder mehrere Reaktiv-Kunstharze auf Epoxidharzbasis beinhaltet, wie nachstehend weiter beschrieben, und Härter (Komponente (B)), wobei weitere Zusätze in einer oder beiden der Komponenten vorgesehen sein können, worin die miteinander reaktionsfähigen Komponenten (A) und (B) und ggf. weitere separate Komponenten so enthalten sind, dass sie während der Lagerung nicht miteinander reagieren können, vorzugsweise so, dass sie vor der Anwendung nicht miteinander in Berührung kommen, die es jedoch ermöglicht, die Komponenten (A) und (B) und gegebenenfalls weitere Komponenten zur Befestigung an der gewünschten Stelle, beispielsweise direkt vor oder in einem Loch oder Spalt, so zu vermischen und erforderlichenfalls einzubringen, dass dort die Härtungsreaktion stattfinden kann. Auch geeignet sind Patronen, beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie insbesondere Mehr- oder bevorzugt Zweikomponentenkartuschen, in deren Kammern die vorzugsweise zwei Komponenten (insbesondere Komponenten (A) und (B)) des erfindungsgemäßen Befestigungsmörtels zur Aufbewahrung vor der Nutzung enthalten sind, wobei vorzugsweise auch ein Statikmischer zum entsprechenden Kit gehören kann. Die Verwendung eines erfindungsgemäßen Befestigungsmörtels am gewünschten Einsatzort erfolgt dann durch Mischen der zugehörigen Komponenten.

Die Komponenten (A) und (B) werden bevorzugt in einem Verhältnis gemischt, das entsprechend der EEW-

(unter Berücksichtigung der auf Acrylat-basierten Verbindungen zurückgehende Äquivalente) und AHEW-Werte eine weitgehend ausgeglichene Stöchiometrie ergibt. Zur bestimmungsgemäßen Anwendung des mehrkomponentigen Befestigungsmörtelsystems werden die Epoxidharzkomponente (A) und die Härterkomponente (B) aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente (B) reagieren mit den Epoxidharzen der Harzkomponente (A) unter Polyaddition, sodass die Epoxidharzmasse unter Umgebungsbedingungen innerhalb einer gewünschten Zeit aushärtet.

Das erfindungsgemäße mehrkomponentige Befestigungsmörtelsystem wird bevorzugt für Bauzwecke eingesetzt. Der Begriff *"für Bauzwecke"* bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz.

Ganz besonders bevorzugt dienen die vorstehend beschriebenen mehrkomponentigen Befestigungsmörtelsysteme zur chemischen Befestigung von Verankerungselementen in einem Loch oder Spalt in einem Bausubstrat.

Die Erfindung betrifft ferner ein Verfahren zur Befestigung von einem Verankerungselement in einem Loch oder Spalt in einem Bausubstrat, bei dem ein mehrkomponentiges Befestigungsmörtelsystem, welches wie vorstehend beschrieben in einer Komponente (A) Reaktiv-Kunstharz auf Epoxidharzbasis und Acrylat-basierte Verbindungen beinhaltet, und in einer weiteren Komponente (B) Härter beinhaltet, und ein Verankerungselement in das Loch oder den Spalt eingebracht und aushärten gelassen werden.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

## BEISPIELE

Alle hier aufgelisteten Chemikalien und Bestandteile der Zusammensetzungen sind kommerziell erhältlich und wurden in der kommerziell üblichen Qualität eingesetzt, soweit nicht anders angegeben.

Die Bestimmung der Epoxidäquivalent- (EEW; epoxy equivalent weight, d.h. der Menge Harz in g, die 1 Mol Epoxidgruppen enthält) und Aminwasserstoff-Äquivalentgewichts-Werte (AHEW; amine hydrogen equivalent weight, d.h. der Menge Amin in g, die 1 mol reaktives H enthält) in den nachstehenden Beispielen erfolgt in für den Fachmann bekannter Weise anhand der Formulierung der Reaktionsmischung aus den bekannten H-Äquivalenten der verwendeten Edukte und Rohstoffe, aus denen sie errechnet werden. Die EEW-Werte sind in der Regel auf den Ausgangsmaterialien von den Herstellern angegeben oder sie werden nach bekannten Methoden ermittelt bzw. berechnet. Im erfindungsgemäßen Beispiel, enthaltend Acrylat-Verbindungen in der Komponente (A), werden EEW und Acrylat-Äquivalentgewicht kombiniert.

### Herstellung der mehrkomponentigen Befestigungsmörtelsysteme

Komponente (A):

Die flüssigen Komponenten wurden gemischt. Anschließend wurden Quarz und Kieselsäure zugegeben und im Dissolver (PC Laborsystem, Volumen 1L) unter Vakuum bei 3500 U/min für 10 min gerührt.

| Stoff | Funktion | Beispiel [Gew.-%] | Vergleichsbeispiel [Gew.-%] |
|---|---|---|---|
| Bisphenol A-basiertes Epoxidharz[1] | Epoxidharz | 30,8 | 30,8 |
| Bisphenol F-basiertes Epoxidharz[2] | Epoxidharz | 13,2 | 13,2 |
| 1,4-Butanediol-diglycidyl ether[3] | Reaktiwerdünner | 10,8 | 10,8 |

(fortgesetzt)

| Stoff | Funktion | Beispiel [Gew.-%] | Vergleichsbeispiel [Gew.-%] |
|---|---|---|---|
| Acrylsäure, Reaktionsprodukte mit Pentaerythritol[4] | Reaktiwerdünner | 6,5 | 0 |
| Trimethylolpropantriglycidylether[5] | Reaktiwerdünner | 0 | 6,5 |
| Quarz[6] | Füllstoff | 35,7 | 35,7 |
| Kieselsäure[7] | Verdicker | 3,0 | 3,0 |
| EEW [g/EQ] | | 237* | 251 |
| [1]: Araldite GY 240, Huntsman, CH<br>[2]: Araldite GY 282, Huntsman, CH<br>[3]: Araldite DY 026, Huntsman, CH<br>[4]: MCure 400, Sartomer, F<br>[5]: Araldite DY-T, Huntsman, BE<br>[6]: Millisil W12, Quarzwerke Frechen, D<br>[7]: Cab-O-Sil TS-720, Cabot Rheinfelden, D<br>* EEW und Acrylat-Äquivalentgewicht kombiniert | | | |

Komponente (B):

Die flüssigen Komponenten wurden gemischt. Anschließend wurden Quarz und Kieselsäure zugegeben und im Dissolver (PC Laborsystem, Volumen 1L) unter Vakuum bei 3500 U/min für 10 min gerührt.

| Stoff | Funktion | [Gew.-%] | Handelsname | Hersteller |
|---|---|---|---|---|
| mXDA-Resorcin-basierte Mannich-Base in mXDA | Aminhärter | 62,4 | - | - |
| Zement | Füllstoff | 13,6 | Secar 80 | Kerneos, D |
| Quarz | Füllstoff | 20,0 | Millisil W12 | Quarzwerke Frechen, D |
| Kieselsäure | Verdicker | 4,0 | Cab-O-Sil TS-720 | Cabot Rheinfelden, D |
| AHEW = 79 g/EQ | | | | |

**ANWENDUNGSBEISPIELE**

Die Komponenten (A) und (B) werden im Speedmixer in einem Verhältnis gemischt, das entsprechend der EEW- und AHEW-Werte eine ausgeglichene Stöchiometrie (A:B = 1:1) ergibt (*"Beispiel* a" und *"Vergleichsbeispiel"*). Zusätzlich wird für die Acrylat-haltige Beispielrezeptur eine zweite Mischung mit leichtem Härter-Unterschuss hergestellt (*"Beispiel b",* A:B = 1,03:1). Das Gemisch wird möglichst blasenfrei in eine 1K-Kartusche gefüllt und sofort ins Bohrloch injiziert.

Für Auszugsversuche mit Gewindestangen M12 wird, gemäß ETAG 001 PART 5, wie folgt vorgegangen: Zunächst werden Bohrlöcher (Durchmesser 14 mm; Tiefe 72 mm) in einen horizontal liegenden Betonprüfkörper (Betontyp C20/25) mit einem Hammerbohrer eingebracht. Die Bohrlöcher werden mit Druckluft (2 x 6 bar), einer Drahtbürste (2 x) und anschließend wieder Druckluft (2 x 6 bar) gereinigt. Anschließend werden die Bohrlöcher vom Bohrgrund her mit der jeweiligen zu prüfenden härtbaren Masse für Befestigungszwecke zu zwei Dritteln befüllt.

Je Bohrloch wird eine Gewindestange von Hand eingedrückt. Der Mörtelüberschuss wird mittels eines Spachtels entfernt. Nach der für den jeweiligen Versuch angegebenen Zeit wird die Gewindestange gezogen bis zum Versagen unter Messung der Versagenslast.

Trockener Beton, hammergebohrt

Abstützung confined

Reinigung = 2x Ausblasen (Druckluft) 6 bar, 2x Bürsten, 2x Ausblasen (Druckluft 6 bar)

| Versuch | A1 Verbundspannung [N/mm²] Nach 24 h @ 23 °C | A23 Verbundspannung [N/mm²] nach 48 h @ 5 °C | A23 Verbundspannung [N/mm²] nach 168 h @ -5 °C |
|---|---|---|---|
| Beispiel a | 34,6 | 33,5 | 25,7 |
| Beispiel b | 35,4 | 32,1 | 25,5 |
| Vergleichsbeispiel | 34,4 | 26,0 | 19,5 |

Die erfindungsgemäßen Beispiele zeigen, dass bei gleicher Aushärtezeit sowohl bei +5 °C, als auch bei -5 °C deutlich höhere Lasten erreicht werden als beim Vergleichsbeispiel (Lastwerte bei -5 °C um > 30 % größer). Die Viskosität der beiden Harzmischungen ist hierbei vergleichbar, was einen direkten Vergleich der Beispiele zulässt.
Durch die Zugabe des Acrylates kommt es demnach bei tiefen Temperaturen zu einer deutlichen Beschleunigung der Reaktion und damit der Aushärtung.

## Patentansprüche

1. Verwendung von Acrylat-basierten Verbindungen in der Komponente (A) eines mehrkomponentigen Befestigungsmörtelsystems zur Beschleunigung des Aushärtens bei niedrigen Temperaturen.

2. Verwendung gemäß Anspruch 1, wobei das mehrkomponentige Befestigungsmörtelsystem in einer Komponente (A) Reaktiv-Kunstharz auf Epoxidharzbasis und die Acrylat-basierten Verbindungen beinhaltet, und in einer weiteren Komponente (B) Härter beinhaltet.

3. Verwendung gemäß Anspruch 1 oder 2, wobei die Komponente (A) des mehrkomponentigen Befestigungsmörtelsystems 1 bis 30 Gew.-%, vorzugsweise 5 bis 20 Gew.-% an Acrylat-basierten Verbindungen enthält, bezogen auf das Gesamtgewicht der flüssigen Bestandteile in der Komponente (A).

4. Verwendung gemäß einem der Ansprüche 1 bis 3, wobei das mehrkomponentige Befestigungsmörtelsystem die Form eines Zwei-Komponenten-Systems aufweist.

5. Verwendung gemäß einem der Ansprüche 1 bis 4, wobei das mehrkomponentige Befestigungsmörtelsystem, im Vergleich zu einem Befestigungsmörtelsystem das keine Acrylat-basierten Verbindungen enthält, nach gleicher Aushärtezeit bei einer Temperatur von 5°C oder weniger eine um mindestens 10% höhere Verbundspannung zeigt.

6. Mehrkomponentiges Befestigungsmörtelsystem, welches

   - in einer Komponente (A) Reaktiv-Kunstharz auf Epoxidharzbasis und Acrylat-basierte Verbindungen beinhaltet, und
   - in einer weiteren Komponente (B) Härter beinhaltet.

7. Mehrkomponentiges Befestigungsmörtelsystem gemäß Anspruch 6, wobei die Komponente (A) 1 bis 30 Gew.-%, vorzugsweise 5 bis 20 Gew.-% an Acrylat-basierten Verbindungen enthält, bezogen auf das Gesamtgewicht der flüssigen Bestandteile in der Komponente (A).

8. Mehrkomponentiges Befestigungsmörtelsystem gemäß Anspruch 6 oder 7 in Form eines Zwei-Komponenten-Systems.

9. Verwendung eines mehrkomponentigen Befestigungsmörtelsystems nach einem der Ansprüche 6 bis 8 zum Befestigen von Verankerungselementen in einem Loch oder Spalt in einem Bausubstrat.

10. Verfahren zur Befestigung von einem Verankerungselement in einem Loch oder Spalt in einem Bausubstrat, bei dem ein mehrkomponentiges Befestigungsmörtelsystem nach einem der Ansprüche 6 bis 8 und ein Verankerungselement in das Loch oder den Spalt eingebracht und aushärten gelassen werden.

Europäisches Patentamt
European Patent Office
Office européen des brevets

# EUROPÄISCHER RECHERCHENBERICHT

Nummer der Anmeldung
EP 21 18 5976

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 2 366 738 A1 (ILLINOIS TOOL WORKS [US]) 21. September 2011 (2011-09-21)<br>* Absatz [0003] - Absatz [0007] *<br>* Absatz [0044] - Absatz [0048] *<br>* Absatz [0055] *<br>* Beispiel 1 und 2 *<br>----- | 1-10 | INV.<br>C08G59/50<br>C08G59/68<br>C08K5/103 |
| X | EP 3 623 407 A1 (HILTI AG [LI]) 18. März 2020 (2020-03-18)<br>* Beispiele *<br>----- | 1,3-10 | |
| X | WO 2020/033258 A1 (ILLINOIS TOOL WORKS [US]) 13. Februar 2020 (2020-02-13)<br>* Beispiele *<br>----- | 6-10 | |
| A | WO 2014/161637 A1 (FISCHERWERKE GMBH & CO KG [DE]) 9. Oktober 2014 (2014-10-09)<br>* das ganze Dokument *<br>----- | 1-10 | |
| | | | RECHERCHIERTE SACHGEBIETE (IPC) |
| | | | C08G<br>C08K |

2

Der vorliegende Recherchenbericht wurde für alle Patentansprüche erstellt

| Recherchenort | Abschlußdatum der Recherche | Prüfer |
|---|---|---|
| Den Haag | 13. Dezember 2021 | Hoffmann, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 18 5976

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2021

| Im Recherchenbericht angeführtes Patentdokument | Datum der Veröffentlichung | Mitglied(er) der Patentfamilie | Datum der Veröffentlichung |
|---|---|---|---|
| EP 2366738 A1 | 21-09-2011 | AU 2004276280 A1 | 07-04-2005 |
| | | CA 2539937 A1 | 07-04-2005 |
| | | CN 1871299 A | 29-11-2006 |
| | | EP 1673411 A2 | 28-06-2006 |
| | | EP 2366738 A1 | 21-09-2011 |
| | | JP 4805830 B2 | 02-11-2011 |
| | | JP 2007518840 A | 12-07-2007 |
| | | NZ 546208 A | 25-06-2010 |
| | | NZ 585267 A | 30-06-2011 |
| | | US 2005090626 A1 | 28-04-2005 |
| | | US 2009131608 A1 | 21-05-2009 |
| | | WO 2005030894 A2 | 07-04-2005 |
| EP 3623407 A1 | 18-03-2020 | AU 2019340354 A1 | 18-02-2021 |
| | | CA 3107852 A1 | 19-03-2020 |
| | | CN 112638984 A | 09-04-2021 |
| | | EP 3623407 A1 | 18-03-2020 |
| | | EP 3850030 A1 | 21-07-2021 |
| | | KR 20210059707 A | 25-05-2021 |
| | | US 2021332217 A1 | 28-10-2021 |
| | | WO 2020053114 A1 | 19-03-2020 |
| WO 2020033258 A1 | 13-02-2020 | AU 2019319670 A1 | 18-02-2021 |
| | | EP 3833723 A1 | 16-06-2021 |
| | | FR 3084889 A1 | 14-02-2020 |
| | | WO 2020033258 A1 | 13-02-2020 |
| WO 2014161637 A1 | 09-10-2014 | CN 105073926 A | 18-11-2015 |
| | | DE 102014103924 A1 | 09-10-2014 |
| | | EP 2981582 A1 | 10-02-2016 |
| | | JP 6345234 B2 | 20-06-2018 |
| | | JP 2016520676 A | 14-07-2016 |
| | | US 2016053141 A1 | 25-02-2016 |
| | | WO 2014161637 A1 | 09-10-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1431365 A
- EP 2366738 A
- EP 1256615 A


### In der Beschreibung aufgeführte Nicht-Patentliteratur


- **A. D. MCNAUGHT ; A. WILKINSON.** Compendium of Chemical Terminology. Blackwell Scientific Publications, 1997
- **ULRICH CHRIST ; ROB RASING.** Epoxidharze. Vincentz Network GmbH & Co KG, 2015
- **LEE H ; NEVILLE K.** Handbook of Epoxy Resins. McGraw-Hill, 1982